# EUROPÄISCHE PATENTSCHRIFT

(11) **EP 2 635 804 B1**
(45) Veröffentlichungstag und Bekanntmachung des Hinweises auf die Patenterteilung: **17.04.2019**
(21) Anmeldenummer: 11778644.2
(22) Anmeldetag: 04.11.2011
(51) Int. Cl.: F03D 7/02, F03D 80/80, F03D 15/20, F03D 13/20, F03D 13/10, F03D 80/50, F03D 80/70, F03D 1/06, F03D 9/25

(54) **WINDENERGIEANLAGE**
WIND POWER PLANT
ÉOLIENNE

(30) Priorität: 04.11.2010 DE 102010043435
(43) Veröffentlichungstag der Anmeldung: 11.09.2013
(60) Teilanmeldung: 14175560.3
(73) Patentinhaber: Wobben Properties GmbH, 26607 Aurich (DE)
(72) Erfinder: FRICKE, Werner, 26605 Aurich (DE); SARTORIUS, Florian, 26789 Leer (DE); BAUMGÄRTEL, Christian, 26605 Aurich (DE); HILDEBRAND, Arno, 26409 Wittmund (DE); GUDEWER, Wilko, 26506 Norden (DE); GEIKEN, Peter, 26721 Emden (DE); RÖER, Jochen, 27777 Ganderkesee (DE)
(74) Vertreter: Eisenführ Speiser
(86) Internationale Anmeldenummer: PCT/EP2011/069459
(87) Internationale Veröffentlichungsnummer: WO 2012/059591

(56) Entgegenhaltungen:
- EP-A1- 1 319 830
- EP-A1- 2 194 269
- EP-A2- 1 837 519
- WO-A1-2011/061016
- WO-A2-2009/125121
- WO-A2-2009/156243
- DE-A1- 10 102 255
- DE-A1-102008 038 740
- DE-A1-102009 008 437
- US-A1- 2010 061 852
- US-A1- 2010 164 228

## Beschreibung

Die vorliegende Erfindung betrifft eine Windenergieanlage. Außerdem betrifft die vorliegende Erfindung einen Modulträger, eine Rotornabe, einen Maschinenträger, eine Generatorkonstruktion, einen Aufnahmezapfen, eine Gondelkonstruktion und eine Gondel einer Windenergieanlage. Ferner betrifft die vorliegende Erfindung ein Verfahren zum Errichten einer Windenergieanlage und ein Verfahren zum Betreiben einer Windenergieanlage.

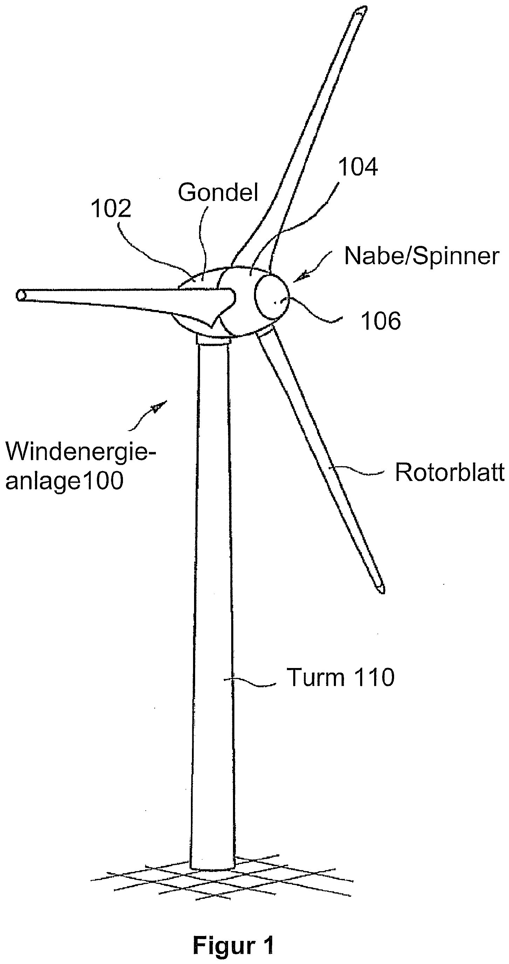

Windenergieanlagen sind allgemein bekannt und weisen im Wesentlichen einen Turm und eine Gondel mit einem aerodynamischen Rotor mit Rotorblättern, sowie einen elektrischen Generator auf. Figur 1 zeigt einen solchen grundsätzlichen Aufbau einer Windenergieanlage.

Windenergieanlagen werden verwendet, um aus Wind elektrische Energie zu generieren. Da bei einer Windenergieanlage für die Primärenergie, nämlich den Wind, keine Kosten entstehen, hängen die Kosten der Generierung der elektrischen Energie von der Anschaffung und dem Betrieb der Windenergieanlage ab. Um die Energieausbeute aus dem Wind zu erhöhen, können größere Windenergieanlagen gebaut werden. Solche größeren Windenergieanlagen führen jedoch regelmäßig zu höheren Anschaffungs- und Betriebskosten, die regelmäßig in dem Maße steigen, wie die gezielte Erhöhung der Energieausbeute aus dem Wind damit steigt. Oftmals steigen die Kosten einer solchen größeren Windenergieanlage sogar stärker. Somit kann mit größeren Windenergieanlagen eine größere Windausbeute an einem Standort erzielt werden, wobei letztendlich aber keine kostengünstigere Erzeugung elektrischer Energie erreicht wird.

Die deutsche Patentanmeldung 10 2008 038 740 A1 beschreibt eine Windenergieanlage sowie ein Verfahren zum Beheizen von Energiespeichern, die in der Rotornabe der Windenergieanlage angeordnet sind. Die Offenlegungsschrift 10 2009 008 437 A1 betrifft einen Maschinenträger zur Aufnahme einer Rotor-/Generatorbaugruppe einer getriebelosen Windenergieanlage, wobei der Maschinenträger die Rotor-/Generatorbaugruppe mit dem Turm der Windenergieanlage verbindet. Die europäische Patentanmeldung 1 319 830 A1 beschreibt einen multipolaren Aerogenerator, bei dem der Windrotor axial an dem Ende einer Achse angeordnet ist. Weiterhin ist der europäischen Patentanmeldung 2 194 269 A1 ein windbetriebener elektrischer Leistungsgenerator zu entnehmen, der dazu vorbereitet ist, eine Temperatur in dem Rotorkopf zu steuern. Die Patentschrift WO 2009 156 243 A2 zeigt ein weiteres Beispiel einer Windenergieanlage.

Aufgabe der vorliegenden Erfindung ist es somit, die genannten Probleme anzugehen, insbesondere die Energieausbeute aus dem Wind zu verbessern. Zumindest soll eine alternative Lösung vorgeschlagen werden.

Erfindungsgemäß wird ein Modulträger nach Anspruch 1 vorgeschlagen. Ein solcher Modulträger ist somit zum Befestigen elektrischer Module an der Rotornabe der Windenergieanlage vorgesehen. Solche elektrischen Module werden zum Steuern eines oder mehrerer Pitchantriebe einer Windenergieanlage verwendet. Insbesondere bei einer Windenergieanlage mit mehreren Rotorblättern sind entsprechend mehrere Pitchantriebe vorgesehen. Ein Pitchantrieb ist ein Antrieb, der den Anstellwinkel eines Rotorblattes zum Wind verstellt, was auch als Pitchen bezeichnet wird. Es ist zumindest ein Pitchantrieb pro Rotorblatt vorgesehen. Bei einer Windenergieanlage mit drei Rotorblättern sind somit zumindest drei Pitchantriebe vorgesehen. Bei Verwendung von zwei oder mehr Pitchantrieben pro Rotorblatt - was beispielsweise aus Redundanzgründen zum Erhöhen einer Ausfallsicherheit vorgeschlagen wird, können entsprechend mehr Pitchantriebe vorgesehen sein.

Die Pitchantriebe sind entsprechend anzusteuern und dafür können die folgenden elektrischen Module vorgesehen sein.

Ein Transformatormodul ist vorgesehen, um die Pitchantriebe mit elektrischer Energie zu versorgen, nämlich von einem externen Versorgungsnetz vorgesehen elektrische Energie so umzuformen, insbesondere in der Spannung zu senken, dass sie für die Ansteuerung der Pitchantriebe geeignet ist. Es kann ausreichend sein, ein Transformatormodul für alle Pitchantriebe vorzusehen, so dass nur ein Transformator notwendig wäre. Natürlich können auch mehrere Transformatormodule vorgesehen sein.

Weiterhin kann ein Unterverteilungsmodul vorgesehen sein, das insbesondere digitale Informationen an jeden Pitchantrieb verteilt. Insbesondere zentrale Steuerwerte oder Vorgabewerte, wie beispielsweise ein einzustellender Rotorblattwinkel, der für alle Rotorblätter gelten kann, kann von einer zentralen Steuereinheit vorgegeben und durch das Unterverteilungsmodul an die Pitchantriebe weitergegeben werden. Diese Weitergabe kann direkt an den Pitchantrieb erfolgen, oder aber an eine dem Pitchantrieb jeweils zugeordnete Steuereinheit. Eine solche Steuereinheit kann in einem Blattregelmodul aufgenommen sein. Ein solches Blattregelmodul ist somit insbesondere jeweils für jeden Pitchantrieb, zumindest aber für jedes Rotorblatt vorzusehen.

Weiterhin kann ein Blattrelaismodul für jedes Rotorblatt vorgesehen sein. Ein solches Blattrelaismodul kann elektrische Umschaltungen vornehmen. Hierunter kann eine Umschaltung von einer herkömmlichen Steuerung basierend auf einem externen Versorgungsnetz zu einer Steuerung basierend auf einem elektrischen Notspeicher fallen. Ein Blattrelaismodul ist üblicherweise auch jeweils für jedes Rotorblatt vorgesehen.

Die besagte Notspeichereinheit kann als Speichermodul, nämlich elektrische Speichermodul zum Speichern elektrischer Energie vorgesehen sein. Eine bevorzugte Variante ist die Verwendung eines Kondensatormoduls, bei dem die elektrische Energie zum Ansteuern eines Pitchmotors, also eines Pitchantriebs in einem Kondensatormodul gespeichert ist. Ein solcher elektrischer Speicher, also ein solches Speichermodul ist vorzugsweise ebenfalls für jedes Rotorblatt vorgesehen.

Somit ergebe sich für eine Windenergieanlage mit drei Rotorblättern die Notwendigkeit für ein Transformatormodul, ein Unterverteilungsmodul, drei Blattregelmodule, drei Blattrelemodule und drei Speichermodule. Es wären also 11 Module notwendig, die sämtlichst zum Ansteuern der Pitchantriebe benötigt werden. Die Pitchantriebe sind funktionsbedingt am Rotorblatt und damit an der Rotornabe der Windenergieanlage angeordnet. Die Rotornabe dreht sich naturgemäß relativ zu übrigen Teilen der Windenergieanlage, insbesondere zu übrigen Teilen der Gondel der Windenergieanlage. Die besagten Module müssen damit auch an der sich drehenden Rotornabe vorgesehen und befestigt werden. Um den Aufwand der Befestigung von 11 Modulen zu verringern, wird somit der Modulträger vorgeschlagen. Auf diesem sind sämtliche oben beschriebenen Module befestigt, insbesondere auf einem Grundkörper bzw. Tragkörper und dieser Grundkörper bzw. Tragkörper und damit der Modulträger als solcher sind dazu vorbereitet, in axialer Richtung der Rotorachse vor der Rotornabe befestigt zu werden. Die vorliegende Erfindung geht von einer Windenergieanlage mit einer im Wesentlichen horizontalen Rotorachse aus. In axialer Richtung der Rotorachse vor der Rotornabe bezieht sie sich auf eine Position der Rotornabe zum Wind hin, bei bestimmungsgemäßer Verwendung der Windenergieanlage.

Dies hat den Vorteil, dass die Windenergieanlage, insbesondere ihre Gondel im Wesentlichen gefertigt und aufgebaut werden kann und zum Ende des Aufbaus der Windenergieanlage hin braucht der Modulträger mit sämtlichen Modulen wie oben beschrieben nur noch von vorn an der Rotornabe befestigt zu werden. Eine Befestigung der einzelnen Module - 11 Module gemäß obigem Beispiel - an dem Modulträger ist ohne weiteres in der Produktionsstätte vorbereitbar. Am Aufstellungsort der Windenergieanlage braucht dann nur dieser vorgefertigte Modulträger also mit den Modulen bereits bestückte Modulträger an der Rotornabe befestigt zu werden. Die Anschlüsse zum Verbinden mit den Pitchantrieben und etwaige Verbindungen zur Gondel hin können dann beispielsweise durch Steckverbinder und/oder über eine Schleifringvorrichtung vorgenommen werden. Der Aufwand und im Übrigen auch die Fehleranfälligkeit beim Anordnen der beschriebenen Module kann somit reduziert werden. Damit einher geht auch eine Kostenreduzierung. Es ist zu beachten, dass die Befestigung von Modulen an der Rotornabe, die sich im Betrieb der Windenergieanlage ständig dreht, aufgrund dieser Drehung besonderen Anforderungen unterliegt. Durch eine Vorbestückung des Modulträgers mit den Modulen in der Werkshalle können etwaige Befestigungsprobleme einzelner Module verringert oder sogar ausgeschlossen werden. Im Übrigen treten gerade an der Rotornabe neben der ständigen Drehbewegung auch Schwingungen auf, die ebenfalls zu besonderen Anforderungen und Belastungen etwaiger Elemente an der Rotornabe führen.

Der Tragkörper und damit im Ergebnis auch der Modulträger ist als Ringscheibe ausgebildet. Eine solche Ringscheibe nimmt sämtliche Module im Grunde in einer kreisförmigen Anordnung auf und kann dann an der Rotornabe befestigt werden. Die Module können dadurch im Wesentlichen symmetrisch um die Rotorachse herum angeordnet werden. Dies vermeidet bei guter Platzausnutzung eine Exzentrizität durch die Module. Dabei ist zu beachten, dass ein solcher Modulträger mit den genannten Modulen beispielsweise ein Gewicht von 1,5 t bei einer 3 MW Windenergieanlage aufweisen kann. Es wird somit eine Anordnung des Modulträgers vorgeschlagen, bei der der Modulträger und insbesondere der Tragkörper im Grunde senkrecht zur Rotorachse angeordnet sind. Dies gilt insbesondere für die erläuterte Verwendung eines im Wesentlichen als Ringscheibe ausgebildeten Modulträgers bzw. Tragkörpers.

Zum Schutz insbesondere dieser Module und gegebenenfalls anderer Elemente der Rotornabe ist eine Verkleidung der Rotornabe vorgesehen, die allgemein als Spinnerverkleidung bezeichnet werden. Diese Spinnerverkleidung deckt somit insbesondere den Modulträger ab und schützt ihn vor Witterung. Dazu kann der Modulträger an die Kontur und Größe der Spinnerverkleidung angepasst sein. Beispielsweise kann eine Anpassung an die Spinnerverkleidung auch bei Verwendung der beschriebenen ringscheibenförmigen Ausbildung erfolgen.

Die Spinnerverkleidung kann unter anderem für einen vorderen Bereich der Rotornabe und damit den Bereich, in dem sich der Modulträger befinden wird, eine Spinnerkappe aufweisen. Diese Spinnerkappe ist bei der Errichtung der Windenergieanlage mit der restlichen Spinnerverkleidung zu verbinden. Zum Transport kann eine elastische Verbindung zwischen einer solcher Spinnerkappe und dem Modulträger vorgesehen sein. Wird der Modulträger dann an der Rotornabe befestigt, ist es möglich, die Spinnerkappe trotzdem an dem Trägermodul befestigt zu lassen. Durch die Verwendung einer elastischen Verbindung werden auftretende Spannungen vermieden.

Zudem wird eine Rotornabe einer Windenergieanlage mit einem Modulträger wie beschrieben vorgeschlagen. Der Modulträger wird mittels Haltevorrichtungen starr an der Rotornabe an ihrer dem Wind zugewandten Seite anordnet und befestigt. Die Befestigung erfolgt hierbei so, dass der Modulträger mit seinem Grundkörper bzw. Tragkörper und damit der Modulträger als solcher im Wesentlichen senkrecht zur Rotorachse angeordnet ist. Zudem kann wie beschrieben eine elastische Verbindung zwischen Modulträger und Spinnerabdeckung, insbesondere Spinnerkappe, vorgesehen sein. Weiterhin wird ein Maschinenträger einer getriebelosen Windenergieanlage zum Tragen eines mit einem aerodynamischen Rotor der Windenergieanlage verbundenen elektrischen Generators vorgeschlagen. Bei getriebelosen Windenergieanlagen nimmt der elektrische Generator ganz erhebliche bautechnische Ausmaße an. Ein solcher Generator kann einen Durchmesser von 5 m, eine Tiefe von 1 m und ein Gewicht von weit über 50 t aufweisen, um nur ungefähre Werte zum Verdeutlichen anzugeben. Ein solcher Generator muss letztlich von dem Maschinenträger getragen werden. Hinzu kommt das Gewicht und auch die Windbelastung durch den aerodynamischen Rotor, also insbesondere durch die Rotorblätter. All diese Kräfte müssen letztlich über den Maschinenträger auf den Windenergieanlagenturm übertragen werden. Der Maschinenträger stellt somit das Übergangselement von Generator und Rotor zum Turm dar, wobei der Maschinenträger auf einem Azimutlager befestigt ist. Der aerodynamische Rotor und auch der elektrische Rotor weist eine im Wesentlichen waagerechte Rotorachse auf, wohingegen der Turm eine im Wesentlichen senkrechte Turmachse aufweist. Unter einer im Wesentlichen waagerechten Rotorachse ist insbesondere zu verstehen, dass diese nicht und auch nicht annähernd senkrecht steht. Die waagerechte Rotorachse betrifft auch den vorliegenden Typ der Windenergieanlage, nämlich eine sogenannte Horizontalachsenwindenergieanlage. Leichte Schrägstellungen der Rotorachse fallen auch unter eine im Wesentlichen waagerechte Rotorachse.

Der vorgeschlagene Maschinenträger weist einen ersten und einen zweiten jeweils etwa rohrförmigen Abschnitt auf. Diese beiden rohrförmigen Abschnitte durchsetzen sich teilweise. Insbesondere ist der erste rohrförmige Abschnitt so ausgebildet, dass er den zweiten rohrförmigen Abschnitt aufnimmt. Der zweite rohrförmige Abschnitt durchsetzt somit zum Teil den ersten rohrförmigen Abschnitt. Außerdem sind Teile des ersten rohrförmigen Abschnitts auch im Inneren des zweiten rohrförmigen Abschnitts vorhanden, so dass der erste rohrförmige Abschnitt auch den zweiten teilweise durchsetzt. Zumindest sollte einer der beiden rohrförmigen Abschnitte den anderen zumindest teilweise durchsetzen.

Unter rohrförmigen Abschnitt ist hier jeweils ein Abschnitt zu verstehen, der eine Form aufweist, die ihrer Form nach aus einem Rohr - das auch konisch sein kann - ausgeschnitten ist. Zumindest ist ein kreisringförmiger Abschnitt vorhanden.

Vorzugsweise weist der erste rohrförmige Abschnitt eine mit der senkrechten Turmachse übereinstimmenden Mittelachse auf. Eine solche Mittelachse entspräche auch einer senkrechten durch den beschriebenen Kreisringabschnitt. Es kommt nicht darauf an, dass die senkrechte Turmachse absolut exakt mit besagter Mittelachse des ersten rohrförmigen Abschnitts übereinstimmt. Dennoch ist die bevorzugte Ausgestaltung so, dass der erste rohrförmige Abschnitt im Wesentlichen als Fortsetzung des ebenfalls rohrförmigen Turms angesehen werden kann.

Ebenso wird vorzugsweise vorgeschlagen, dass der zweite rohrförmige Abschnitt eine mit der Rotorachse übereinstimmende Mittelachse aufweist. Zum Tragen des Generators und/oder der Rotornabe kann ein Achszapfen und/oder ein Aufnahmezapfen vorgesehen sein, die selbst eine Mittelachse aufweisen, die mit der Rotorachse, also der Drehachse des Rotors übereinstimmen. Dieser Achszapfen und/oder dieser Aufnahmezapfen können eine Fortführung des zweiten Rohrabschnitts des Maschinenträgers darstellen.

Anschaulich gesprochen schafft für diese Ausführungsform der vorgeschlagene Maschinenträger eine Verbindung zwischen dem Turm und dem Achszapfen bzw. Aufnahmezapfen. Ihre Achsen treffen sich dabei vorzugsweise in dem Maschinenträger.

Vorzugsweise weist der erste rohrförmige Abschnitt einen größeren mittleren Durchmesser auf als der zweite rohrförmige Abschnitt. Diese Ausführungsform kann auch die größten Verhältnisse des Turmdurchmessers einerseits und des Durchmessers des Achszapfens oder Aufnahmezapfens andererseits wiederspiegeln, obwohl üblicherweise weder der Turm, noch der Achszapfen bzw. Aufnahmezapfen in axialer Richtung jeweils einen konstanten Durchmesser aufweisen. Dennoch kann in einer Ausführungsform eine Fortführung beider Elemente in dem Maschinenträger erkannt werden. Vorzugsweise ist zumindest einer der beiden rohrförmigen Abschnitte, insbesondere beide konisch ausgebildet. Auch die passt zu der beschriebenen Fortführung der Form des Turms einerseits und des Achszapfens bzw. Aufnahmezapfens andererseits. Der vorgeschlagene Maschinenträger schafft somit eine angepasste und dabei stabile Kraftübertragung zwischen Generator und Rotornabe einerseits und Turm andererseits.

Vorzugsweise ist der Maschinenträger so ausgebildet, dass eine seitliche Durchgangsöffnung vorgesehen ist. Diese seitliche Durchgangsöffnung ist so ausgebildet, dass sie für eine Person einen Weg vom Inneren des Turms zur Gondel schafft, der durch den inneren Bereich des ersten rohrförmigen Abschnitts verläuft und seitlich an dem zweiten rohrförmigen Abschnitt vorbei. Insbesondere bei der Ausgestaltung eines im Durchmesser größeren ersten Rohrabschnitts und im Durchmesser kleineren zweiten Rohrabschnitts, wobei der zweite Rohrabschnitt im Grunde vom ersten Rohrabschnitt aufgenommen wird, ergeben sich Größenverhältnisse, die zur beschriebenen Ausgestaltung eines Durchgangs für Personen genutzt werden können.

Günstig ist es, den Maschinenträger als Gussteil, also Stahlgussteil vorzusehen. Hierdurch wird ein massives, stabiles Element als Maschinenträger geschaffen. Es ist somit zu betonen, dass die erläuterte rohrförmige Ausgestaltung der beiden ersten und zweiten rohrförmigen Abschnitte letztlich in einem einzigen Gussteil vorgesehen werden. D. h., dass zwar der Erscheinung nach eine Durchsetzung zumindest zum Teil zwischen den beiden rohrförmigen Abschnitten erfolgt, diese Durchsetzung aber nicht ein Zusammensetzen zweier rohrförmiger Abschnitte bedeutet. Vielmehr ist eine wie beschriebene Ausgestaltung gezielt gewählt worden, um der Situation der Windenergieanlage Rechnung zu tragen, insbesondere um eine gezielte Lastübertragung zu erreichen. Insbesondere erfolgt eine - anschaulich gesprochen - Lastumlenkung von der im Wesentlichen waagerechten Rotorachse zur im Wesentlichen senkrechten Turmachse.

Vorzugsweise weist der Maschinenträger einen bzw. mehrere Aufnahmeabschnitte zum Aufnehmen von Azimutantrieben auf. Je nach konkreter Anlage können beispielsweise 4 bis 20, vorzugsweise 12 Azimutantriebe vorgesehen sein. Diese Azimutantriebe werden somit in dieser jeweiligen Aufnahme direkt mit dem Maschinenträger befestigt und können somit den Maschinenträger relativ zum Turm drehen und damit die Gondel der Windenergieanlage, insbesondere einschließlich ihres Rotors in den Wind drehen. Erfindungsgemäß wird zudem eine Generatortragkonstruktion zum Tragen eines elektrischen Generators einer getriebelosen Windenergieanlage vorgeschlagen. Der elektrische Generator weist einen Stator und einen Rotor auf. Der Rotor wird als elektrischer Rotor bezeichnet, um eine Verwechselung mit dem Rotorblätter aufweisenden aerodynamischen Rotor zu vermeiden. Aus demselben Grund kann anstell des Begriffs "elektrischer Rotor" der Begriff" Läufer" verwendet werden.

Die Generatortragkonstruktion kann einen Maschinenträger, insbesondere gemäß einem der beschriebenen Ausführungsformen eines Maschinenträgers aufweisen. Weiterhin kann ein Aufnahmezapfen zum Befestigen an dem Maschinenträger und zum Tragen eines Statorträgers vorgesehen sein. Der Aufnahmezapfen wird somit am Maschinenträger befestigt und an ihm wird der Statorträger befestigt. Der Statorträger kann vorzugsweise als Statorglocke ausgebildet sein. Der Statorträger hat somit eine etwa glockenförmige Form, um an seinem Rand den Stator zu tragen und ist dazu vorgesehen, in einem Mittenbereich an dem Aufnahmezapfen befestigt zu werden. Bestimmungsgemäß ist der Stator dann konzentrisch um den Aufnahmezapfen und damit konzentrisch um eine Rotorachse angeordnet.

Entsprechend kann auch der Statorträger als Teil der Generatortragkonstruktion vorgesehen sein. Weiterhin kann ein Achszapfen zum Befestigen an dem Aufnahmezapfen und zum Tragen des elektrischen Rotors bzw. Läufers vorgesehen sein. Gleichzeitig kann der Achszapfen eine Rotornabe mit aerodynamischem Rotor tragen. Dabei wird der Achszapfen fest an dem Aufnahmezapfen befestigt und das Tragen des elektrischen als auch des aerodynamischen Rotors erfolgt mittels wenigstens einem, vorzugsweise wenigstens zweier Lager, um den elektrischen und aerodynamischen Rotor drehbar auf dem Achszapfen zu lagern. Bei Verwendung von zwei Lagern werden diese vorzugsweise - bezogen auf eine Achse des Achszapfens - an zwei äußeren Enden des Achszapfens - vorgesehen. Hierdurch wird eine hohe Kippstabilität erreicht.

Insbesondere umfasst die Generatortragkonstruktion den Maschinenträger, den Aufnahmezapfen, den Statorträger und den Achszapfen zusammen. Der Aufnahmezapfen stellt hierbei ein Verbindungsglied zwischen Maschinenträger, Statorträger und Achszapfen dar. Der Aufnahmezapfen ist somit zwischen Maschinenträger und Achszapfen angeordnet und der Statorträger ist im Wesentlichen um den Aufnahmezapfen herum angeordnet. Durch diese Ausgestaltung ist es möglich, den Aufnahmezapfen und den Statorträger als getrennte Elemente vorzusehen und insbesondere auch als getrennte Elemente von ihrer Produktionsstätte zum Aufstellungsort der Windenergieanlage zu transportieren. Sowohl der Aufnahmezapfen, als auch der Statorträger können jeweils ein Gewicht von über 10 t, wie beispielsweise 13 oder 14 t aufweisen und diese Gewichte können nun getrennt transportiert werden.

Vorzugsweise sind der Aufnahmezapfen und/oder der Achszapfen hohl ausgestaltet, um Kühlluft dort durch, nämlich in axialer Richtung zu führen. Hierdurch kann Kühlluft vom stehenden Teil der Gondel zum drehenden Teil der Gondel, nämlich zum sogenannten Spinner, also zum Bereich der Rotornabe geführt werden. Hierzu ist es günstig, den Hohlraum zum Führen der Kühlluft entsprechend groß auszugestalten. Insbesondere ist der Raum größer auszugestalten als zum Verlegen notwendiger elektrischer Leitungen durch den Achszapfen und/oder Aufnahmezapfen notwendig wäre. Vorzugsweise ist das Volumen des Hohlraums des Achszapfens bzw. des Aufnahmezapfens größer als das Volumen des Materials, das die Wandung des Achszapfens bzw. Aufnahmezapfens bildet. Vorzugsweise ist der Radius des Hohlraums größer als die Wandungsstärke. Der jeweilige Außendurchmesser ist also weniger als doppelt so groß wie der entsprechende Innendurchmesser. Vorzugsweise ist der Außendurchmesser nur 20 bis 50 % größer als der Innendurchmesser.

Gemäß einer weiteren Ausführungsform wird vorgeschlagen, in dem Aufnahmezapfen und/oder dem Achszapfen ein Gebläse anzuordnen, um einen Luftstrom durch den Aufnahmezapfen bzw. Achszapfen zu erzeugen. Ein solches Gebläse kann Luft in axialer Richtung in den Aufnahmezapfen bzw. Achszapfen blasen. Hierfür kann in dem Achszapfen oder Aufnahmezapfen eine Querwand zum Abschotten vorgesehen sein, in der das Gebläse angeordnet wird.

Erfindungsgemäß wird zudem das Vorsehen eines wie oben beschriebenen Aufnahmezapfens vorgeschlagen. Die Generatortragkonstruktion und somit auch der Aufnahmezapfen sind für eine getriebelose Windenergieanlage vorgesehen. Hierunter ist ein Aufbau zu verstehen, bei dem der aerodynamische Rotor unmittelbar mechanisch mit dem elektrischen Rotor, also Läufer gekoppelt, nämlich fest verbunden ist. Ein solcher Windenergieanlagentyp setzt einen entsprechend großen Generator mit entsprechend großem elektrischen Rotor voraus, insbesondere einen Generator mit einer Vielzahl von Polen. Hierfür wird regelmäßig ein sogenannter Ringgenerator verwendet, bei dem der Rotor und der Stator hinsichtlich ihrer elektrodynamischen Komponenten im Wesentlichen auf einem Ring angeordnet sind. Zum Tragen eines solchen Generators wird die Generatortragkonstruktion und entsprechend der Aufnahmezapfen verwendet.

Erfindungsgemäß wird zudem eine Gondelkonstruktion einer Gondel einer Windenergieanlage vorgeschlagen. Auch diese Gondelkonstruktion wird insbesondere für eine getriebelose Windenergieanlage vorgeschlagen. Eine solche Gondelkonstruktion ist zum Tragen zumindest eines Teils einer Gondelverkleidung, technischer Einrichtungen in der Gondel und/oder zum Tragen von Personen in der Gondel vorgesehen. Die vorgeschlagene Gondelkonstruktion umfasst zumindest einen an einem Maschinenträger biegesteif befestigten Basisbühnenabschnitt. Dieser Basisbühnenabschnitt ist somit ein fester Abschnitt, der auch von Personen, insbesondere Servicepersonal betreten werden soll. Er ist vorzugsweise in einem unteren Bereich um den Maschinenträger herum angeordnet. Auf diesem Basisbühnenabschnitt kann man somit unmittelbar neben dem Maschinenträger stehen bzw. dort technische Gerätschaften anordnen.

Außerdem ist ein Hängebühnenabschnitt vorgesehen, der an dem Maschinenträger und/oder an dem Basisbühnenabschnitt im Wesentlichen an einer hängende Art und Weise angeordnet ist. Ein solcher Hängebühnenabschnitt kann insbesondere in einem hinteren Bereich hinter dem Maschinenträger angeordnet sein, um dort einen Raum für technische Einrichtungen und/oder zum Begehen durch Personal zu schaffen. Durch den Aufbau in im Wesentlichen hängender Art und Weise kann dieser Hängebühnenabschnitt auf einfache Weise vorgesehen sein.

Vorzugsweise ist auf dem Basisbühnenabschnitt ein Tragaufbau angeordnet und befestigt. Der Tragaufbau weist einen vorstehenden Trägerabschnitt auf, insbesondere einen Stahlträger, wie einen Doppel-T-Träger oder dergleichen. Dieser Trägerabschnitt ist insbesondere im Bereich oberhalb des Maschinenträgers angeordnet und kann eine Kranvorrichtung zum Heben von Lasten aufweisen. Der Trägerabschnitt erstreckt sich vorzugsweise nach hinten, also in einen Bereich hinter dem Maschinenträger, also einen Bereich, der von der Nabenseite abgewandt ist. Außerdem oder alternativ kann der Trägerabschnitt mit wenigstens einem mit dem Hängebühnenabschnitt verbundenen Zugträger verbunden sein, um den Hängebühnenabschnitt teilweise zu halten. Dieses Halten erfolgt insbesondere in der Art und Weise eines Aufhängens. Gleichwohl kann der Zugträger auch als Zugstange ausgebildet sein.

Der Tragaufbau bietet somit einen Trägerabschnitt, der eine Doppelfunktion ausführen kann, nämlich als Kran benutzt werden kann und den Hängebühnenabschnitt tragen kann. Hierdurch ist eine weniger massive Ausgestaltung des Hängebühnenabschnitts möglich als wenn eine biegesteife Befestigung desselben am Maschinenträger oder am Basisbühnenabschnitt vorgenommen werden müsste.

Außerdem oder alternativ trägt der Tragaufbau eine Oberbühne, nämlich eine Bühne, die gegenüber der Basisbühne bzw. dem Basisbühnenabschnitt erhöht angeordnet ist. Insbesondere ist diese Oberbühne oberhalb und über dem Maschinenträger angeordnet. Diese Oberbühne kann beispielsweise elektrische Einrichtungen, wie einen Gleichrichter aufnehmen. Weiterhin trägt der Tragaufbau eine Zwischenbühne, die in vertikaler Richtung zwischen dem Basisbühnenabschnitt und der Oberbühne angeordnet ist. Insbesondere ist diese Zwischenbühne neben oder auf halber Höhe des Maschinenträgers angeordnet. Insbesondere ist der Basisbühnenabschnitt oberhalb der Azimutantriebe angeordnet. Somit wird der Raum unmittelbar oberhalb der Azimutantriebe nutzbar gemacht, um dort als Servicepersonal zutreten zu können, als auch um auf einfache Weise einen Zugang zu den Azimutantrieben zu erhalten. Um die Azimutantriebe von dort zu warten oder gegebenenfalls auszutauschen, können Teile der Zwischenbühne, insbesondere bewegliche Bodenplatten, vorgesehen sein, die zu diesem Zweck entfernt werden können.

Außerdem oder auch alternativ ist an dem Maschinenträger und ergänzend oder alternativ an dem Tragaufbau ein Spantring angeordnet, der eine Gondelverkleidung oder einen Teil davon tragen oder zumindest versteifen kann. Hierdurch ist eine verhältnismäßig große Gondel und damit große Gondelverkleidung möglich, die einen solchen Spantring eine zusätzliche Stabilisierung und insbesondere Versteifung erhalten kann.

Erfindungsgemäß wird zudem eine Gondel einer Windenergieanlage, insbesondere einer getriebelosen Windenergieanlage, vorgeschlagen. Eine solche Gondel nimmt technische Einrichtung auf, die zum Betrieb der Windenergieanlage benötigt werden. Hierzu gehört insbesondere der Generator sowie elektrische Anschlüsse desselben. Auch der Maschinenträger und andere konstruktive Elemente sind in der Gondel aufgenommen und die Gondel umfasst eine Gondelverkleidung zum Schützen der technischen Einrichtung vor Witterung. Mit anderen Worten wird durch die Gondelverkleidung ein im Wesentlichen abgeschlossener Betriebsraum geschaffen.

In der Gondelverkleidung sind zum Einlassen von Außenluft zum Belüften der Gondel und/oder zum Kühlen der Windenergieanlage oder Teilen davon Lüftungsöffnungen vorgesehen. Zumindest ist eine Lüftungsöffnung vorgesehen. Die Lüftungsöffnungen weisen Tröpfchenabscheider auf, um Feuchtigkeit einströmender Luft abzuschalten. Die Öffnungen mit diesem Tröpfenabscheider sind vorzugsweise an Seitenbereichen der Gondel und damit der Gondelverkleidung vorgesehen.

Bisher war es üblich, dass Luft durch gegen Regen geschützte Öffnungen in die Gondel einströmen konnte, soweit dazu Bedarf bestand. Eine solche geschützte Öffnung kann z. B. unterhalb der Gondel in einem Übergangsbereich zum Turm vorgesehen sein. An dieser Stelle ist regelmäßig ein Öffnungsringspalt vorgesehen, weil sich die Gondel bei einer Azimutverstellung relativ zum Turm bewegt. Je nach Witterungsbedingung, wie z. B. beim Vorhandensein von Neben oder auch bei starkem Regenfall bestand die Gefahr, dass trotzdem Feuchtigkeit durch solche regengeschützten Öffnungen mit der Luft eingezogen wurde. Durch die Verwendung der Tröpfchenabschalter wird diesbezüglich eine Lösung vorgeschlagen. Eine andere Variante des Einziehens trockener Luft bestand darin, die Luft aus dem Turminneren in die Gondel strömen zu lassen. Die Turmluft hat sich jedoch als teilweise zu warm erwiesen, da sie durch Einrichtungen insbesondere im Turmfuß bereits angewärmt ist. Entsprechend eignet sich die Turmluft nicht sehr gut zum Kühlen. Die vorgeschlagene Lösung vermeidet das Einziehen zu warmer Luft aus dem Turm. Vorzugsweise besteht somit eine im Wesentlichen luftdichte Abdichtung, sowohl im Übergangsbereich zwischen Gondelverkleidung und Turm, als auch zum Turminneren hin, um hierdurch den Bezug von Kühlluft gezielt auf Außenluft zu beschränken, die besagte Tröpfchenabscheider passiert hat.

In der Gondel ist somit zumindest ein Gebläse zum Kühlen vorgesehen. Diese Gebläse befördern Luft aus einem ersten Gondelbereich zu dem Bereich oder den Bereichen, an denen die Kühlung erforderlich ist. Dadurch entsteht ein Unterdruck in diesem ersten Gondelbereich, der zu einem Einsaugen von Außenluft durch die Öffnungen mit Tröpfchenabscheider in diesen ersten Bereich führt. Beispielsweise kann Außenluft von außen durch den Tröpfchenabscheider in den ersten Bereich der Gondel strömen, von dort weiter mittels eines Gebläses durch einen Hohlraum in dem Aufnahmezapfen weiter durch einen Hohlraum in dem Achszapfen in den Spinnerbereich und damit in den Nabenbereich strömen, um dort elektrische Einrichtungen, wie Pitchantriebe und deren Module zu kühlen. Von dem Spinnerbereich bzw. Nabenbereich tritt die Luft dann in einem Übergangsbereich zwischen Spinnerverkleidung und Gondelverkleidung, also in einem Bereich zwischen stehender und drehender Verkleidung aus der Gondel wieder aus.

Eine bevorzugte Gondel und auch eine bevorzugte Windenergieanlage umfasst somit zumindest einen erfindungsgemäße Gondelkonstruktion, einen Spantring zum Tragen und/oder Versteifen der Gondelverkleidung oder eines Teils davon, einen erfindungsgemäßen Modulträger, eine erfindungsgemäße Rotornabe, einen erfindungsgemäßen Maschinenträger, eine erfindungsgemäße Generatortragkonstruktion und/oder einen erfindungsgemäßen Aufnahmezapfen.

Eine erfindungsgemäße Windenergieanlage weist insbesondere eine erfindungsgemäße Gondel auf. Vorzugsweise ist somit in einem Übergangsbereich zwischen Gondelverkleidung und Turm eine Abdichtung gegen Luftdurchtritt von Außenluft vorgesehen und/oder der Turm ist in seinem Inneren gegen Luftdurchtritt von Luft aus dem Turminneren abgedichtet. Hierzu kann beispielsweise im oberen Bereich des Turms eine Zwischenplattform vorgesehen sein, die entsprechend luftdicht ausgestaltet ist. Es ist zu betonen, dass die Luftdichtigkeit hier durchaus kleinere Öffnungen aufweisen kann. Die Abdichtung soll insoweit erfolgen, dass keine oder nur geringe Luftmengen durch die abgedichteten Bereiche in die Gondel gelangen. Insbesondere soll ein starker Luftstrom unterbunden werden und kleinere Luftströme können akzeptabel sein. Auch kann es unschädlich sein, wenn eine Öffnung in einer solchen Zwischenebene im Turm geöffnet wird, um beispielsweise Servicepersonal den Durchgang zu ermöglichen. Eine Schleuse ist nicht zwingend erforderlich, kann aber vorgesehen sein.

Erfindungsgemäß wird ein Verfahren zum Errichten einer Windenergieanlage vorgeschlagen. Hierbei wird ein mit elektrischen zum Steuern eines oder mehrerer Pitchantriebe einer Windenergieanlage vorgesehener Module vorgefertigter bzw. vorbestückter Modulträger verwendet, insbesondere ein erfindungsgemäßer Modulträger. Die Windenergieanlage wird zumindest hinsichtlich der Gondel und insbesondere der Nabe so weit wie möglich zusammengebaut. Die fertige Nabe, die hierbei entweder bereits mit Rotorblättern versehen ist, oder wobei Rotorblätter erst später angeordnet werden, wird dann mit dem Modulträger ausgestattet. Der Modulträger wird somit an der Rotornabe befestigt und somit sind sämtliche Module, die für das Betreiben der Pitchantriebe notwendig sind, an ihrem Platz. Die notwendigen elektrischen Verbindungen können über entsprechende Steckverbinder auf einfache Weise vorgenommen werden. Zum Zuführen elektrischer Energie oder elektrischer Signale aus dem stehenden Teil der Gondel kann eine Schleifringvorrichtung vorgesehen sein, die insbesondere an nämlich vor einem Achszapfen angeordnet sein kann. Bei Verwendung eines Modulträgers, der im Wesentlichen als Kreisscheibe oder als Ringscheibe ausgebildet ist, behindert diese Schleifringanordnung die Befestigung des Modulträgers an der Rotornabe nicht, sondern befindet sich in einem mittleren ausgesparten Bereich des Modulträgers. Schließlich kann auch eine elektrische Verbindung mit entsprechenden Leitungen der Schleifringvorrichtung auf einfache Weise mittels Steckverbinder mit dem Modulträger bzw. den darauf angeordneten Modulen vorgenommen werden. Insbesondere erfolgt eine Verbindung zwischen Schleifringvorrichtung und Transformatormodul und/oder Unterverteilungsmodul.

Nachfolgend wird die vorliegende Erfindung anhand von Ausführungsbeispielen unter Bezugnahme auf die begleitenden Figuren beispielhaft erläutert.
- Figur 1: zeigt eine Windenergieanlage in einer perspektivischen Ansicht.
- Figur 2: zeigt eine erfindungsgemäße Gondel in einer Seitenansicht teilweise im Schnitt.
- Figur 3: zeigt einen Maschinenträger in einer perspektivischen Ansicht.
- Figur 4: zeigt eine vordere Schnittansicht eines Maschinenträgers 300 der Figur 3.
- Figur 5: zeigt eine Seitenansicht des Maschinenträgers der Figur 3.
- Figur 6: zeigt einen Aufnahmezapfen in einer seitlichen Schnittansicht.
- Figur 7: zeigt einen Einsatz mit Gebläse zum Einsetzen in einen Innenraum des Aufnahmezapfens der Figur 6.

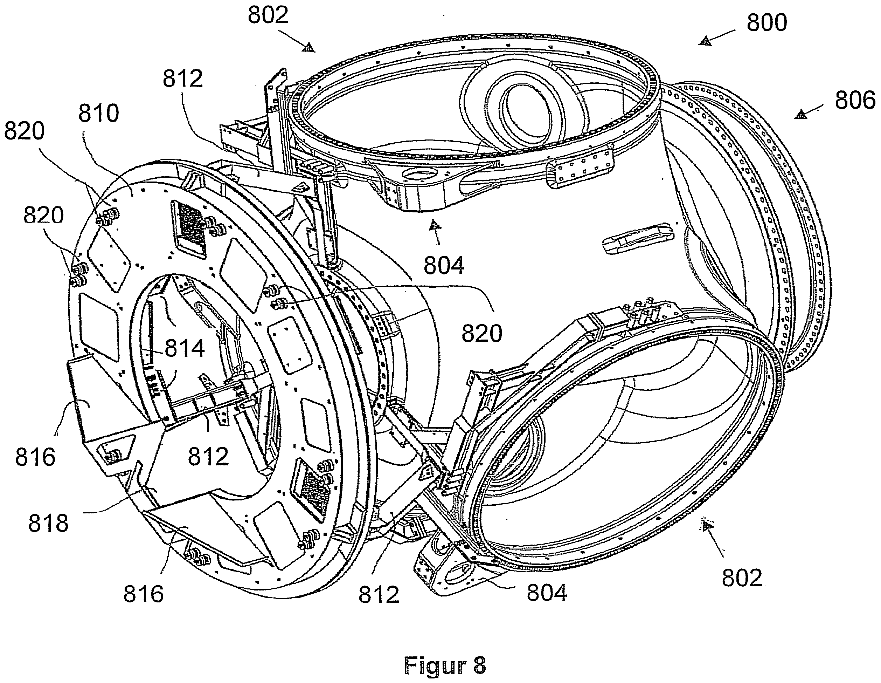

- Figur 8: zeigt eine Rotornabe mit einem Modulträger für Elektromodule in einer perspektivischen Ansicht.
- Figur 9: zeigt die Rotornabe der Figur 8 mit Modulträger in einer Seitenansicht.

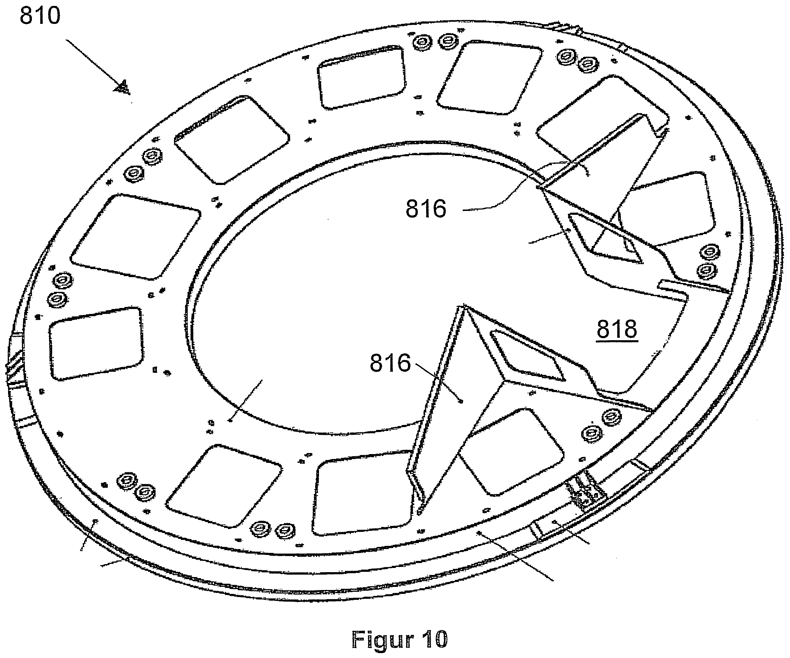

- Figur 10: zeigt den Modulträger der Figuren 8 und 9 in einer perspektivischen Ansicht in einem nicht eingebauten und unbestückten Zustand.
- Figur 11: zeigt den Modulträger der Figur 10 in einer Frontansicht.
- Figur 12: zeigt eine Gondelkonstruktion mit Maschinenträger in einer Seitenansicht.
- Figur 13: zeigt die Gondelkonstruktion der Figur 12 in einer Schnittansicht von vorn.
- Figur 14: zeigt eine perspektivische Ansicht einer Gondel schematisch.

Figur 1 zeigt eine Windenergieanlage in einer perspektivischen Ansicht mit einem Turm, einer auf dem Turm angeordneten Gondel, die eine Nabe mit drei Rotorblättern aufweist. An der Gondel ist eine hintere Gondelverkleidung 102 angedeutet, die den nicht rotierenden Teil der Gondel schützt und im Grunde den hinteren Teil der Gondel kennzeichnet. Weiterhin ist eine Spinnerverkleidung 104 im Bereich der Ansätze der Rotorblätter dargestellt. Schließlich ist eine Spinnerkappe 106 gezeigt, die bestimmungsgemäß zum Wind weist. Der Bereich der Spinnerkappe 106 kennzeichnet zudem den vorderen Teil der Gondel.

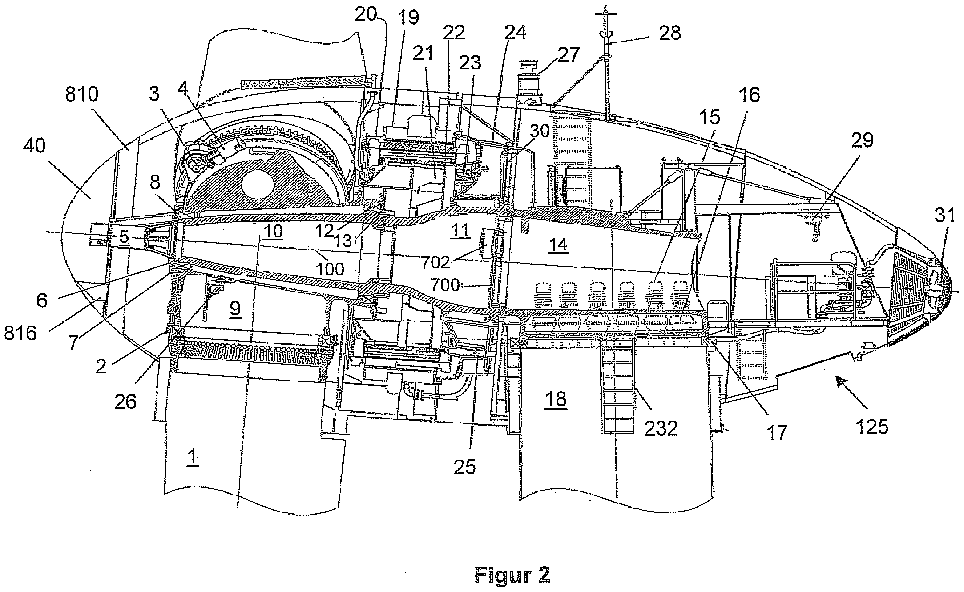

Figur 2 zeigt eine erfindungsgemäße Gondel grundsätzlich in einer Schnittansicht. Diese Gondel weist im Wesentlichen die folgenden Elemente auf:
Ein Rotorblatt 1, ein Blattflanschlager 2, ein Blattverstellgetriebe 3, einen Blattverstellmotor 4, einen Schleifringkörper 5, einen Achsdeckel 6, einen Lagerdeckel vorn 7, ein zweireihiges Kegelrollenlager 8, eine Rotornabe 9, einen Achszapfen 10, einen Aufnahmezapfen 11, ein Zylinderrollenlager 12, einen Lagerdeckel hinten 13, einen Maschinenträger 14, einen Azimutmotor 15, ein Azimutgetriebe 16, ein Azimutlager 17, einen Turm mit Kopfflansch 18, einen Statortragring 19, ein Statorpaket 20, einen Scheibenrotor 21, ein Polpaket 22, eine elektromagnetische Bremszange 23, eine Statorglocke 24, eine Rotorarretierung 25, eine Zentralschmieranlage 26, eine Flugbefeuerung 27, einen Kombi-Windgeber 28, einen Elektrokettenzug 29, der beispielsweise für eine Traglast von 250 kg ausgelegt ist, einen Gondellüfter 30 und einen passiver Heckkühler 31.

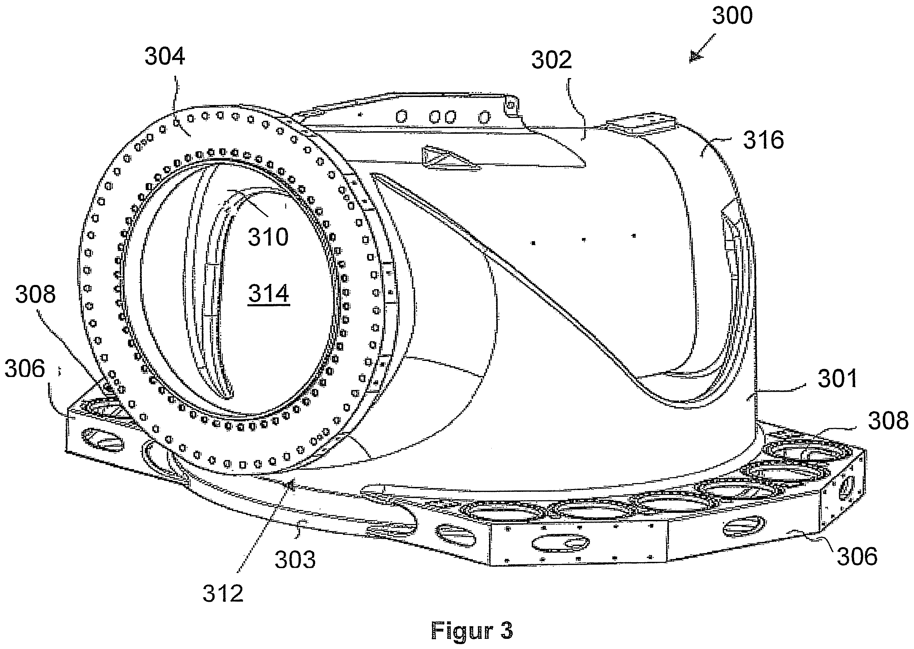

Der Maschinenträger 300 der Figur 3 weist einen ersten rohrförmigen Abschnitt 301 und einen zweiten rohrförmigen Abschnitt 302 auf. Der erste rohrförmige Abschnitt 301 weist eine im Wesentlichen senkrechte Mittenachse auf. An dem ersten rohrförmigen Abschnitt ist ein erster Rohrflanschabschnitt 303 angeordnet, mit dem der Maschinenträger an einem Azimutlager auf einem Turm zu befestigen ist. Im Bereich des ersten Rohrflansches 303 Aufnahmeabschnitte 306 angeordnet zum Aufnehmen von Azimutantrieben, also Azimutmotoren. Jeder Aufnahmeabschnitt 306 weist jeweils sechs Motorenöffnungen 308 auf zum Aufnehmen jeweils eines Azimutmotors.

Der zweite rohrförmige Abschnitt weist im Wesentlichen eine waagerechte Mittenachse auf, die etwas aus der Waagerechten gekippt ist. An dem zweiten rohrförmigen Abschnitt 302 ist ein zweiter Rohrflansch 304 angeordnet, um daran einen Aufnahmezapfen zu befestigen.

Der erste und zweite rohrförmige Abschnitt 301 und 302 sind somit im Wesentlichen bezogen auf ihre Mittenachse quer zueinander angeordnet. Der erste rohrförmige Abschnitt 301 weist einen wesentlich größeren Durchmesser auf als der zweite Rohrabschnitt 302. Der zweite Rohrabschnitt 302 ist so ausgebildet, dass er im Wesentlichen von dem ersten Rohrabschnitt 301 aufgenommen wird. Der erste Rohrabschnitt 301 umfasst zudem einen inneren Stützabschnitt 310, der in dem zweiten Rohrabschnitt 302 ausgebildet ist. Dieser innere Stützabschnitt 310 ist durch eine Öffnung des zweiten Rohrflansches 304 zu erkennen und wird dafür benötigt, den Maschinenträger 300 in seinem Kehlbereich 312, also dem Übergang zwischen erstem und zweitem rohrförmigen Abschnitt 301, 302 zu stärken. Die Hauptbelastung bei einer Verwendung dieses Maschinenträgers 300 ist in diesem Kehlbereich 312 zu erwarten. Eine Aussparung 314 des inneren Stützabschnitts 310 ist als Durchstiegsöffnung für Servicepersonal vorgesehen.

An der dem zweiten Rohrflansch abgewandten Seite des zweiten rohrförmigen Abschnittes 302 ist im Verbindungsbereich zwischen erstem und zweiten rohrförmigen Abschnitt 301, 302 ein umlaufender Stützwulst 316 angeordnet. Hierdurch kann an dieser rückwärtigen Position des zweiten Rohrabschnitts 302 das Vorsehen eines zu dem inneren Stützabschnitt 310 korrespondierenden Stützabschnitts vermieden werden.

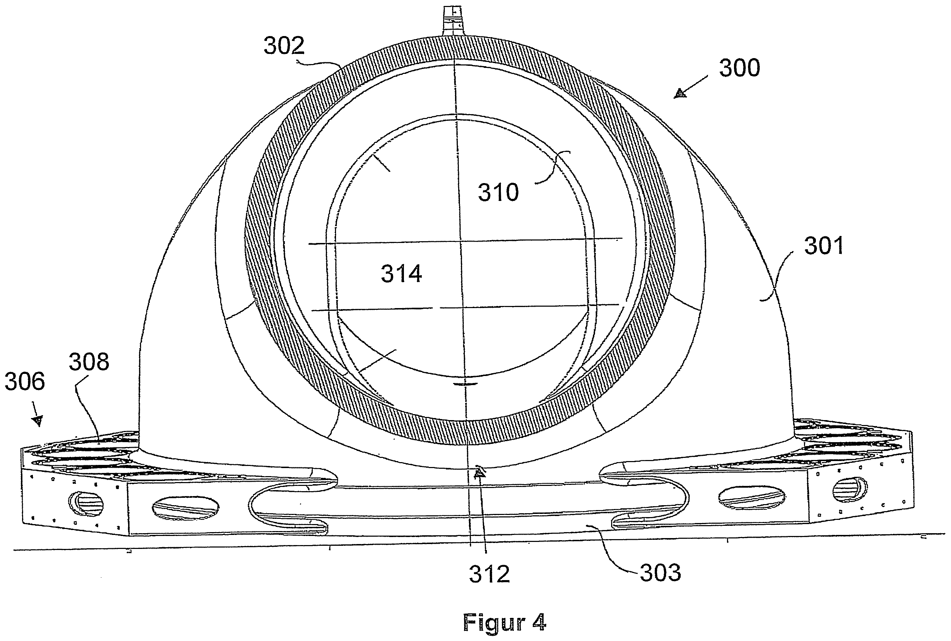

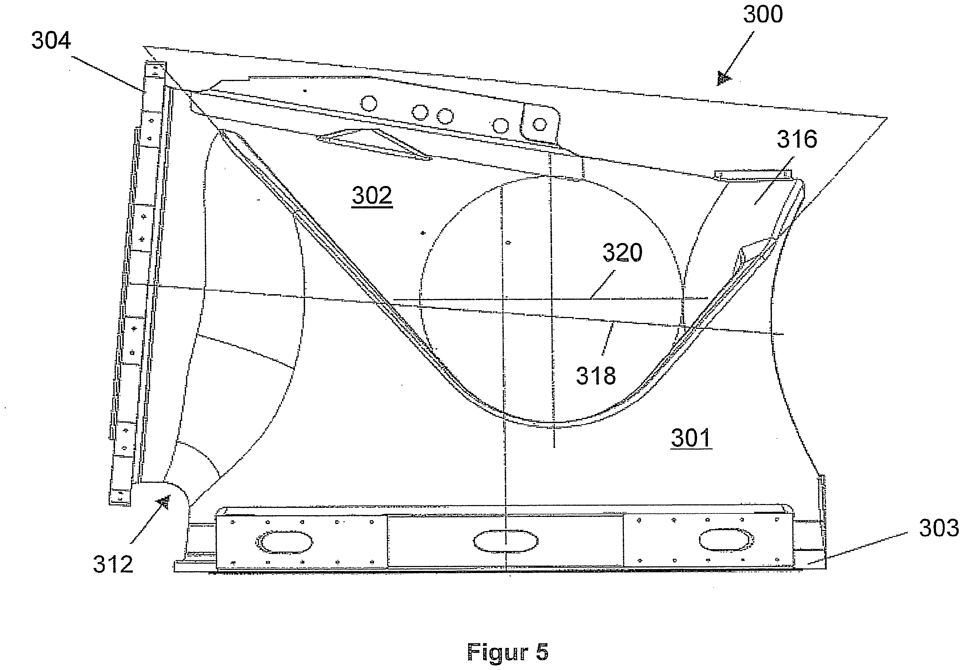

Aus der Figur 4 ist eine Ansicht des Maschinenträgers 300 in einem Schnitt von vorne dargestellt und die Figur 5 zeigt eine Seitenansicht des Maschinenträgers 300. In Figur 5 ist die Mittenachse 318 des zweiten rohrförmigen Abschnitts 302 dargestellt und es ist ein leichtes Kippen gegenüber einer waagerechten Hilfslinie 320 zu erkennen. Im Vergleich zu einer Horizontalachsenwindenergieanlage kann die Mittenachse 318 noch als im Wesentlichen waagerecht bezeichnet werden.

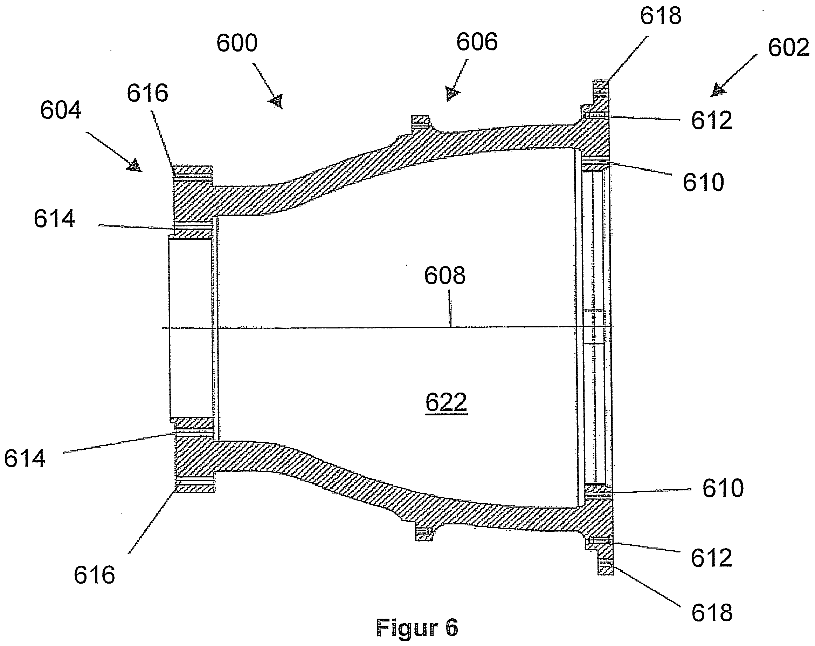

Der Aufnahmezapfen 600 der Figur 6 weist einen maschinenträgerseitigen Flansch 602, einen achszapfenseitigen Flansch 604 und einen mittleren Befestigungsflansch 606 auf. Die Flansche 602, 604 und 606 sind - wie im Grunde der gesamte Aufnahmezapfen 600 - rotationssymmetrisch um die Mittenachse 608 des Aufnahmezapfens. Die Mittenachse 608 entspricht der Rotationsachse der Rotornabe, bei bestimmungsgemäßer Anordnung.

Mittels des maschinenträgerseitigen Flansches 602 ist der Aufnahmezapfen 600 an dem zweiten Rohrflansch 304 des Maschinenträgers 300 der Figur 3 anzuordnen und zu befestigen. Zur Befestigung sind eine Vielzahl von Durchgangsbohrungen 610 sowie einer Vielzahl von gewindebehafteter Sackbohrungen 612 vorgesehen.

Zum Befestigen eines Achszapfens an dem achszapfenseitigen Flansch 604 sind ebenfalls eine Vielzahl von Bohrungen 614 und 616 vorgesehen.

Zum Befestigen eines Statorträgers, nämlich insbesondere einer Statorglocke an dem Aufnahmezapfen 600 ist der mittlere Befestigungsflansch 606, sowie ebenfalls der maschinenträgerseitige Flansch 602 vorgesehen. Der maschinenträgerseitige Flansch 602 weist hierfür eine Vielzahl von Durchgangsbohrungen 618 auf. Außerdem ist der mittlere Befestigungsflansch 606 mit Gewinden versehenen Sackbohrungen 620 ausgestattet. Somit kann ein Maschinenträger an zwei axial versetzten Flanschen 602 und 606 kippstabil angeordnet werden.

Der beschriebene Zusammenbau des Aufnahmezapfens 600 mit dem Maschinenträger 300, einem Statorträger und einem Achszapfen ist auch in der Figur 2 dargestellt. Dort trägt der Aufnahmezapfen das Bezugszeichen 11, der Maschinenträger das Bezugszeichen 14, der Achszapfen das Bezugszeichen 10 und die Statorglocke das Bezugszeichen 24.

Zudem ist zu erkennen, dass die beiden rohrförmigen Abschnitte 301 und 302 konisch ausgebildet sein. Beide rohrförmigen Abschnitte 301, 302 haben im Bereich ihres ersten bzw. zweiten Rohrflansches 303, 304einen größeren Durchmesser als im dazu gegenüberliegenden Bereich.

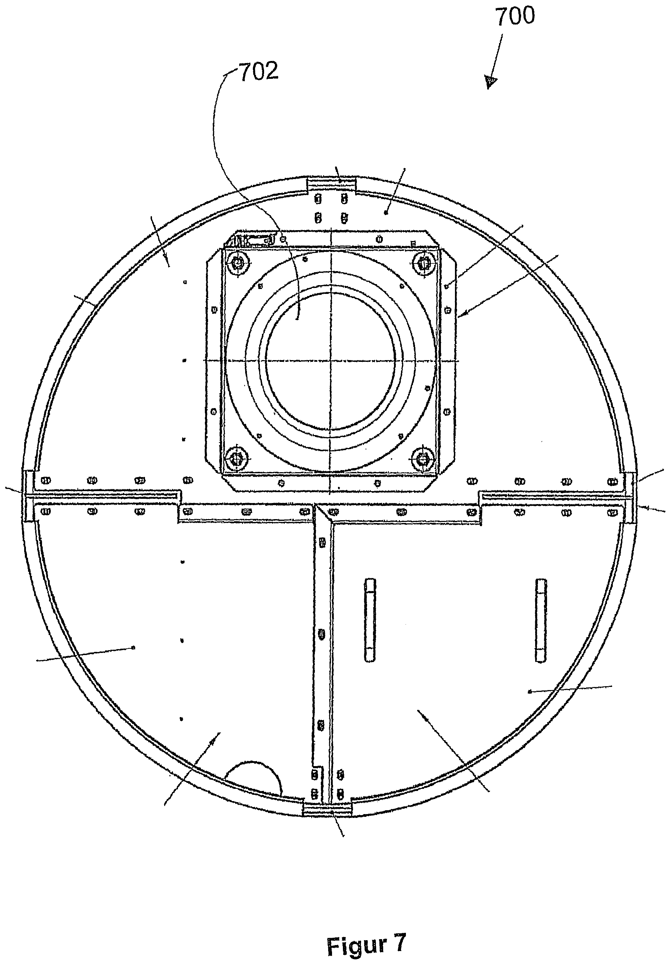

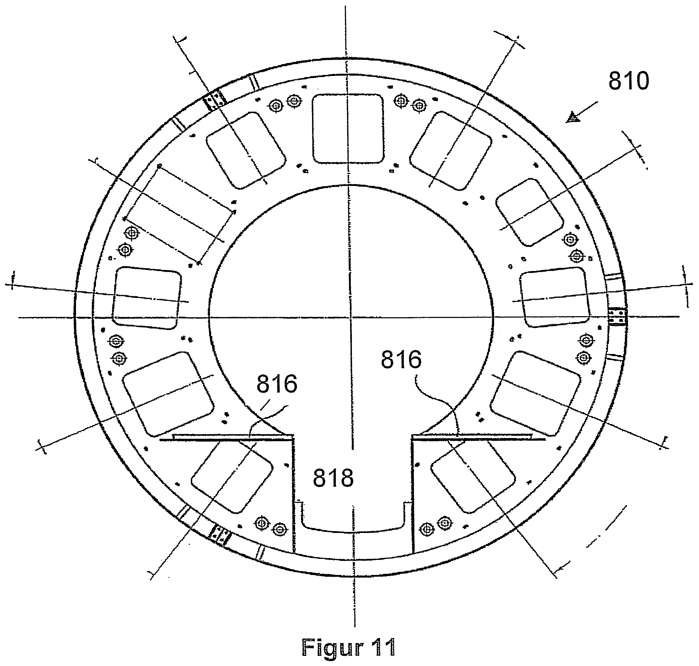

Figur 7 zeigt einen Einsatz 700 mit Gebläse 702 zum Einsetzen in einen Aufnahmezapfen 600 gemäß Figur 6 bzw. 11 gemäß Figur 2. Dieser Einsatz 700 mit Gebläse 702 ist auch in der Figur 2 in eingesetztem Zustand dargestellt. Das Gebläse 702 kann somit die Luft in den Innenraum 622 des Aufnahmezapfens 600 blasen.

Der Einsatz 700 ist ansonsten so ausgestaltet, dass der Innenraum 622 des Aufnahmezapfens 600 verschlossen wird, so dass nur mittels des Gebläses 702 Luft in den Innenraum 622 geblasen werden kann. Hierdurch wird auch ein wieder rückwärts gerichtetes Austreten eingeblasener Luft aus dem Innenraum 602 vermieden. Der Einsatz 700 hat somit die Aufgabe, das Gebläse 702 zu tragen und gleichzeitig den Innenraum 622 des Aufnahmezapfens 600 ansonsten abzuschließen.

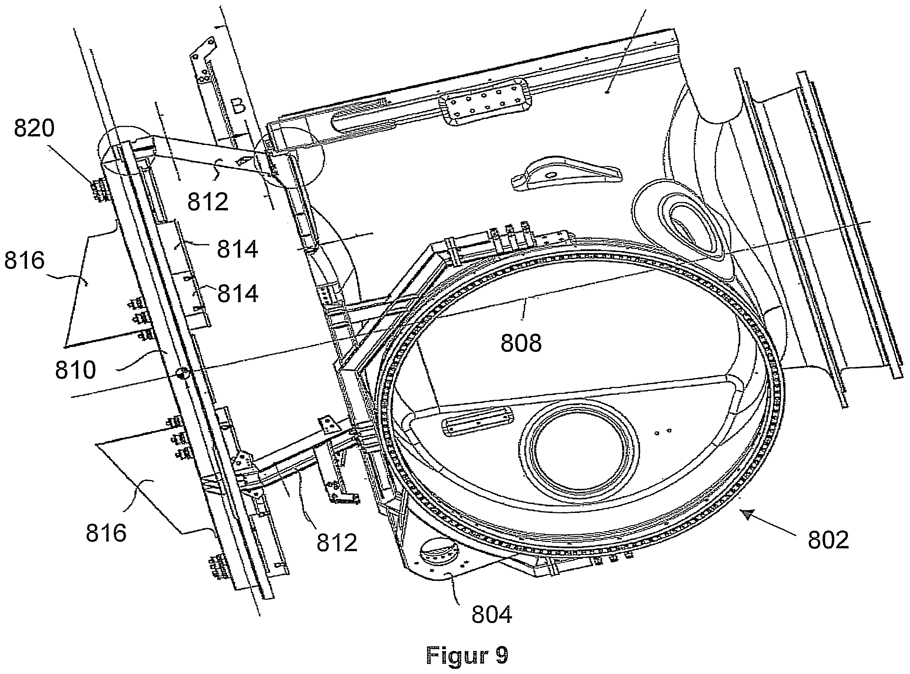

Die Rotornabe 800 weist Blattaufnahmen 802 zum Befestigen jeweils eines Rotorblattes auf. Das Rotorblatt kann dann mittels Pitchantrieben in seinem Anstellwinkel verdreht werden. Hierzu ist an jeder Blattaufnahme eine Pitchmotoraufnahme 804 zum Aufnehmen der Pitchantriebe vorgesehen. Weiterhin weist die Rotornabe 800 zwei Rotorbefestigungsflansche 806 auf zum kippfesten Verbinden mit dem elektrischen Rotor, also Läufer, des Generators. Die Rotornabe 800 wird bestimmungsgemäß auf einem Achszapfen drehbar gelagert. Dadurch wird auch der mit der Rotornabe 800 befestigte elektrische Rotor ebenso drehbar gelagert. Die Figur 9 zeigt hierzu die Mittenachse 808 der Rotornabe 800 und damit die Rotationsachse des aerodynamischen und damit gleichzeitig elektrischen Rotors. Die Anordnung der Rotornabe 800 auf einen Achszapfen ist in der Seitenschnittansicht der Figur 2 dargestellt. Dort ist die Rotornabe 9 mittels eines zweireihigen Kegelrollenlagers 8 und eines Zylinderrollenlagers 12 auf dem Achszapfen 10 drehbar gelagert. Auch die Befestigung des Scheibenrotors an der Rotornabe 9 ist in der Schnittansicht zu erkennen. Zudem ist eine Achse 100 in der Figur 2 eingezeichnet, die eine Rotationsachse und Mittenachse für diverse Elemente bildet.

Zum Vorsehen diverser Elektromodule für die Pitchantriebe, die in der Pitchmotorenaufnahme 804 anzuordnen sind, ist ein Modulträger 810 vorgesehen. Der Modulträger 810 ist mittels Befestigungsstreben 812 an der Rotornabe 800 befestigt. Auch der Modulträger 810 ist im Wesentlichen konzentrisch um die Mittenachse 808 angeordnet. Auf dem Modulträger 810 sind diverse Elektromodule 814 befestigt. Die Elektromodule 814 weisen hierbei von dem Modulträger 810 in Richtung zur Rotornabe 800.

Bei bestimmungsgemäßer Anordnung der Rotornabe 800 auf einem Achszapfen, wie auf dem Achszapfen 10 gemäß der Figur 2, ragt ein Schleifringkörper, nämlich der Schireifringkörper 5 gemäß Figur 2, durch den Modulträger 810 in der Mitte in den freien Bereich hindurch. Um diesen Schleifringkörper 5 zu montieren oder zu demontieren, sind Hilfsbleche 816 vorgesehen, auf denen Servicepersonal stehen und arbeiten kann. Zwischen den beiden Hilfsblechen 816 ist eine Ausnehmung 818 dargestellt. Diese kann für Servicepersonal zum Hindurchsteigen und als Arbeitsraum beim Montieren und Demontieren des Schleifringkörpers 5 verwendet werden. Insbesondere kann der Schleifringkörper beim Demontieren in diese Ausnehmung hin abgesenkt werden.

Zum elastischen Befestigen des Modulträgers 810 mit einer Statorkappe, die als Spinnerkappe 40 in der Figur 2 gezeigt ist, sind elastische Verbindungsmittel 820 paarweise über den Modulträger 810 verteilt.

Die Anordnung des Schleifringkörpers 5, des Modulträgers 810 sowie der Spinnerkappe 40 ist in der Figur 2 angedeutet.

Durch die Verwendung des Modulträgers 810 können die Module zum Versorgen der Pitchantriebe auf einfache Weise vorgesehen sein. Eine bisher bekannte Positionierung solcher E-Module auf dem Scheibenrotor kann hierdurch verbessert werden.

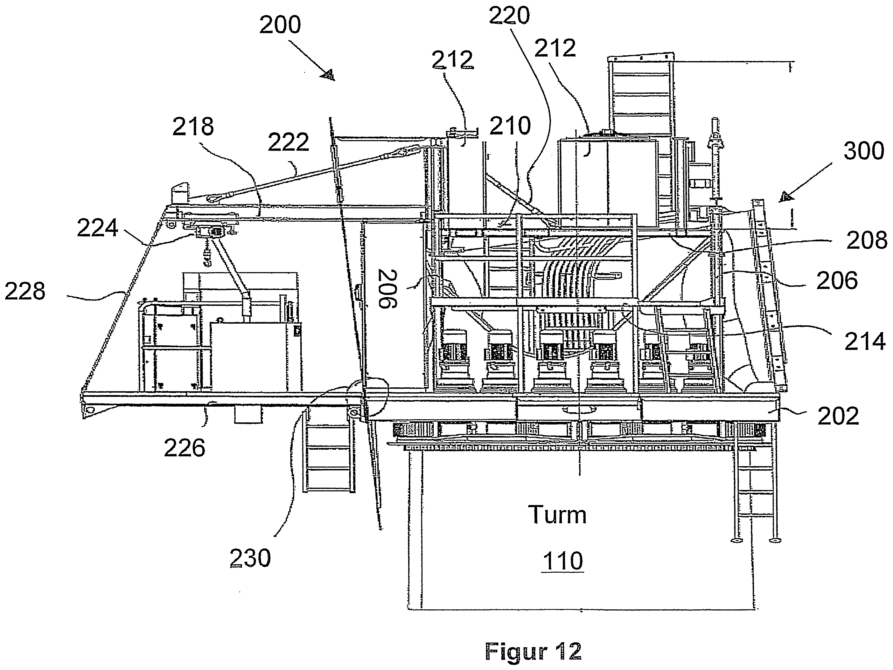

Die Figur 12 zeigt einen Maschinenträger 300, der oberhalb eines Turms 110 angeordnet ist. An dem Maschinenträger 300 befestigt und im Wesentlichen um ihn herum gebaut ist die Gondelkonstruktion 200. Die Gondelkonstruktion 200 weist einen Basisbühnenabschnitt bzw. eine Basisbühne 202 auf, die an dem Maschinenträger 300, insbesondere dort an den Aufnahmeabschnitten 306 biegesteif befestigt sind. Auf der Basisbühne bzw. den Basisbühnenabschnitten 202 ist ein Tragaufbau 204 angeordnet, der mehrere senkrechte Tragstreben 206 sowie waagerechte Tragstreben 208 aufweist. Hierdurch entsteht ein stabiler Tragaufbau 204, der im Grunde den Maschinenträger 300 umbaut. Oberhalb des Maschinenträgers 300 bildet dieser Tragaufbau zudem eine obere Arbeitsbühne auf, auf der Servicepersonal stehen und arbeiten kann und auf der Elektromodule 212 wie beispielsweise ein Gleichrichter oder andere Schaltschränke angeordnet sein können.

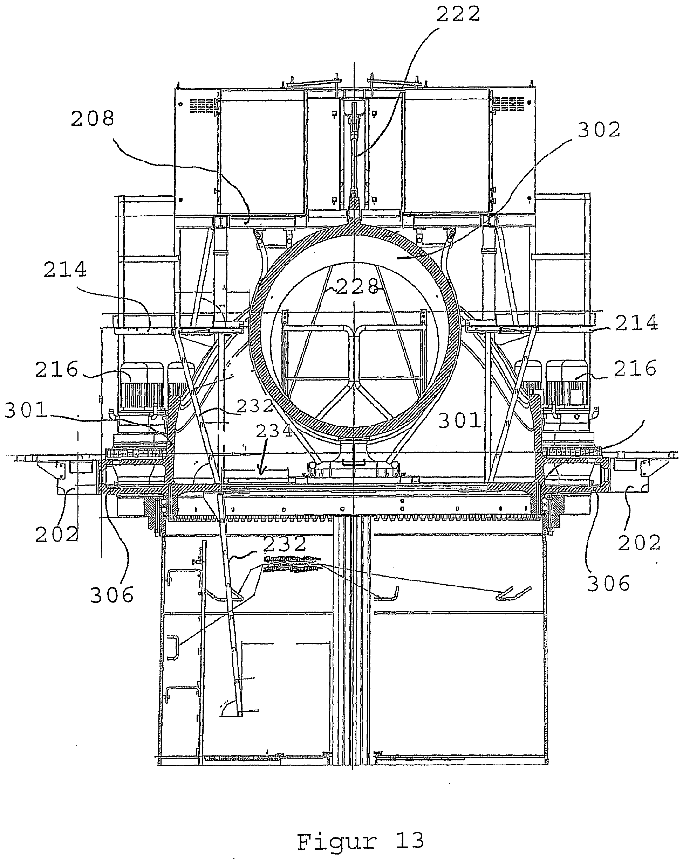

Etwa auf halber Höhe zwischen der Basisbühne 202 bzw. des Basisbühnenabschnitts 202 und der oberen Arbeitsbühne 210 ist eine Zwischenbühne 214 vorgesehen. Wie aus der Figur 13 zu erkennen, ist auf jeder Seite des Maschinenträgers 300 eine solche Zwischenbühne vorgesehen. Unterhalb dieser Zwischenbühne 214 sind Azimutmotoren 216 bzw. Azimutantriebe 216 angeordnet. Von der Zwischenbühne 214 aus ist somit, durch lösbare Bodenplatten, ein Zugriff auf die Azimutantriebe 16 erreichbar.

An dem Tragaufbau 204 ist zudem ein vorstehender Tragabschnitt 218 im Wesentlichen in Gestalt eines Stahlträgers angeordnet. Dieser vorstehende Tragabschnitt 218 wird über eine erste und zweite Haltestange 220 und 222 zusätzlich an dem Tragaufbau 204 gehalten.

Der vorstehende Tragabschnitt 218 erfüllt zumindest zwei Aufgaben, nämlich ist eine Kranvorrichtung 224 vorgesehen, um Lasten zu handhaben und gegebenenfalls auch von außen in die Gondel zu heben. Entsprechend ist auch in der Figur 2 eine Lastenöffnung 125 unterhalb des Krans, der dort das Bezugszeichen 29 trägt, vorgesehen.

Weiterhin dient der vorstehende Tragabschnitt 218 dazu, einen Hängebühnenabschnitt 226 mittels zweier dritter Haltetangen 228 zu tragen. Der Hängebühnenabschnitt 226 ist dazu weiterhin in einem Verbindungsbereich 230 an dem Basisbühnenabschnitt 202 befestigt. Die Befestigung beim Verbindungsbereich 230 ist jedoch nicht biegesteif. Durch das Befestigen im Bereich des Verbindungsbereichs 230 und Halten mittels der drei Haltestangen 228 schafft diesen Hängebühnenabschnitt 226 auf einfache Weise. Vorzugsweise können etwaige elektronische Leitungen in dem Hängeabschnitt bzw. Hängebühnenabschnitt 226 verlegt werden.

Figur 13 zeigt zudem eine Einstiegsleiter 232, die vom Turm zur Gondel reicht. Diese Einstiegsleiter 232 zeigt somit auch einen Weg vom Turm zur Gondel durch die Einstiegsöffnung 234 und der Einstiegsweg führt somit durch den ersten rohrförmigen Abschnitt 301 und außen vorbei an dem zweiten rohrförmigen Abschnitt 302.

Vorteilhafterweise wird eine beschriebene Zwischenbühne 214 oberhalb der Azimutmotoren vorgesehen. Diese Ausgestaltung ist auch dann günstig, wenn auf eine Oberbühne oberhalb des Maschinenträgers verzichtet wird.

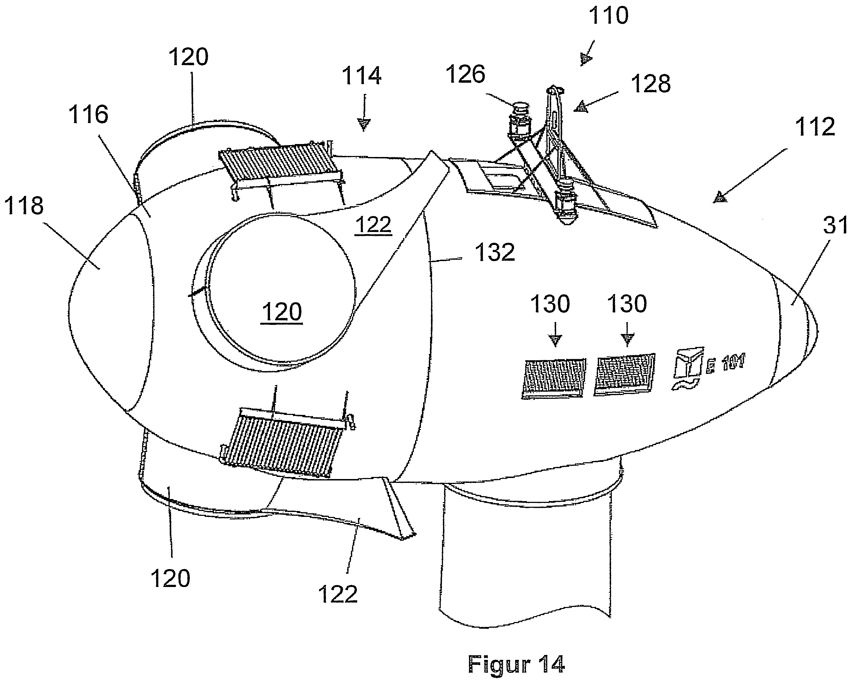

Die Gondel 110 der Figur 14 weist eine feststehende Gondelverkleidung 112 und einen Spinner 114 mit Spinnerverkleidung 116 sowie einer Spinnerkappe 118 auf. Der Einfachheit halber sind keine Rotorblätter dargestellt, sondern nur deren Aufnahme 120, sowie eines festen Rotorblattfortsatzes 122. Weiterhin sind Kühlkörper 124 gezeigt. Der Figur 14 ist noch eine Hindernisbefeuerung 126, ein Messmast 128 und ebenfalls schematisch ein passiver Heckkühler 31 angedeutet.

Weiterhin sind zwei Luftöffnungen 130 in der festen Gondelverkleidung 112 gezeigt. Diese Luftöffnungen 130 weisen Tröpfchenabscheider auf, so dass durch diese Luftöffnungen 130 Luft in die Gondel einströmen kann und etwaige als Tröpfchen vorhandene Feuchtigkeit entfernt wird. Vorzugsweise ist wenigstens einer dieser Tröpfchenabscheider der Luftöffnungen 130 beheizbar, um bei kalten Außentemperaturen ein Zufrieren des Tröpfchenabscheiders und damit ein Verschließen der Luftöffnungen 130 zu verhindern. Da bei tiefen Außentemperaturen nur ein verringerter Kühlbedarf besteht, kann es ausreichend sein, nur einen Teil der Luftöffnungen 130 mit einer solchen Heizvorrichtung zu versehen.

Luft, die durch diese Luftöffnungen 130 in die Gondel eintritt und beispielsweise durch den Aufnahmezapfen 11 und Achszapfen 10 - wie in Figur 2 gezeigt - in den Spinner gelangt, kann durch einen Verbindungsbereich 132 zwischen Spinnerverkleidung 116 und der festen Gondelverkleidung 112 wieder austreten.

In der Figur 2 ist zudem zu erkennen, dass der Durchmesser des Generators, insbesondere des Statorrings 19 und Statorpakets 20 deutlich kleiner als der Durchmesser der Gondelverkleidung der Gondel in diesem Bereich ist.

## Patentansprüche

1. Modulträger (810) zum Befestigen elektrischer, zum Steuern eines oder mehrerer Pitchantriebe einer Windenergieanlage (100) vorgesehener Module, an einer Rotornabe (800) der Windenergieanlage, mit einem Tragkörper zum Tragen der elektrischen Module (814), wobei
- die Rotornabe zum Rotieren um eine im Wesentlichen waagerechte Rotorachse vorbereitet ist und
- die Windenergieanlage ein oder mehrere Rotorblätter (1) aufweist und
- der Tragkörper dazu vorbereitet ist, in axialer Richtung der Rotorachse vor der Rotornabe befestigt zu werden, **dadurch gekennzeichnet, dass**
- der Tragkörper im Wesentlichen als Ringscheibe ausgebildet ist und im Wesentlichen senkrecht zur Rotorachse angeordnet ist, wobei
- die elektrischen Module ein Transformatormodul zum Versorgen der Pitchantriebe mit elektrischer Energie und wenigstens eines der folgenden Elemente umfassen:
- ein Unterverteilungsmodul zum direkten oder indirekten Verteilen digitaler Informationen an jeden Pitchantrieb,
- ein Blattregelmodul für jedes Rotorblatt zum Steuern des jeweiligen Pitchantriebs,
- ein Blattrelaismodul für jedes Rotorblatt zum Durchführen elektrischer Umschaltungen für den jeweiligen Pitchantrieb und/oder
- ein Speichermodul, insbesondere Kondensatormodul, für jedes Rotorblatt zum Speichern und Bereitstellen elektrischer Energie für den jeweiligen Pitchantrieb, insbesondere für eine Notabschaltung.

2. Modulträger (810) nach Anspruch 1, **dadurch gekennzeichnet, dass** der Tragkörper einen an eine Spinnerverkleidung (104) angepassten Umfang aufweist und/oder Befestigungsmittel (820) zum elastischen Verbinden mit der Spinnerverkleidung aufweist.

3. Rotornabe einer Windenergieanlage mit einem Modulträger (810) nach einem der vorstehenden Ansprüche, wobei der Modulträger (810) mittels Haltevorrichtungen starr an der Rotornabe (800) an ihrer dem Wind zugewandten Seite angeordnet ist und/oder wobei der Modulträger (810) mit seinem Tragkörper im wesentlichen senkrecht zur Rotorachse angeordnet ist und/oder wobei der Modulträger (810) elastisch mit einer Spinnerabdeckung verbunden ist.

4. Windenergieanlage, insbesondere getriebelose Windenergieanlage, umfassend einen Modulträger (810) nach einem der Ansprüche 1 bis 2.

5. Windenergieanlage nach Anspruch 4, **dadurch gekennzeichnet, dass** in einem Übergangsbereich zwischen Gondelverkleidung und Turm eine Abdichtung gegen Luftdurchtritt von Außenluft in die Gondel vorgesehen ist und/oder der Turm im Inneren gegen Luftdurchtritt von Luft aus dem Turminneren in die Gondel abgedichtet ist.

6. Verfahren zum Errichten einer Windenergieanlage, wobei ein Modulträger (810), nach einem der Ansprüche 1-2, mit elektrischen, zum Steuern eines oder mehrerer Pitchantriebe einer Windenergieanlage vorgesehener Module vorgefertigt und mit den Modulen bestückt ist und an einer Rotornabe der Windenergieanlage befestigt wird, um dadurch die Module in einem Arbeitsschritt an der Rotornabe zu befestigen.

7. Verfahren nach Anspruch 6, wobei der Modulträger (810) mit wenigstens einem der folgenden Module vorgefertigt ist:
- einem Transformatormodul zum Versorgen der Pitchantriebe mit elektrischer Energie,
- einem Unterverteilungsmodul zum direkten oder indirekten Verteilen digitaler Informationen an jeden Pitchantrieb,
- einem Blattregelmodul für jedes Rotorblatt zum Steuern des jeweiligen Pitchantriebs,
- einem Blattrelaismodul für jedes Rotorblatt zum Durchführen elektrischer Umschaltungen für den jeweiligen Pitchantrieb und/oder
- einem Speichermodul, insbesondere Kondensatormodul, für jedes Rotorblatt zum Speichern und Bereitstellen elektrischer Energie für den jeweiligen Pitchantrieb, insbesondere für eine Notabschaltung.

8. Verfahren nach Anspruch 6 oder 7, wobei eine Windenergieanlage nach Anspruch 4 oder 5 errichtet wird.

## Claims

1. A module carrier (810) for fixing electric modules provided for controlling one or more pitch drives of a wind power installation (100) to a rotor hub (800) of the wind power installation comprising a main body for carrying the electric modules (814), wherein
- the rotor hub is adapted to rotate about a substantially horizontal rotor axis,
- the wind power installation has one or more rotor blades (1),
- the main body is adapted to be fixed in front of the rotor hub in the axial direction of the rotor axis, **characterised in that**
- the main body is substantially in the form of a ring disc and/or is arranged perpendicularly to the rotor axis, wherein
- the electric modules include a transformer module for supplying the pitch drives with electrical energy and at least one of the following elements:
- a distribution module for direct or indirect distribution of digital information to each pitch drive,
- a blade regulating module for each rotor blade for controlling the respective pitch drive,
- a blade relay module for each rotor blade for carrying out electrical switching-over operations for the respective pitch drive, and/or
- a storage module, in particular a capacitor module, for each rotor blade for storing and providing electrical energy for the respective pitch drive, in particular for an emergency shutdown.

2. A module carrier (810) according to claim 1 **characterised in that** the main body has a periphery adapted to a spinner casing (104) and/or has fixing means (820) for elastic connection to the spinner casing.

3. A rotor hub of a wind power installation with a module carrier (810) according to one of the preceding claims, wherein the module carrier (810) is arranged rigidly by means of holding devices at the rotor hub (800) at its side towards the wind and/or wherein the module carrier (810) is arranged with its main body substantially perpendicularly to the rotor axis and/or wherein the module carrier (810) is elastically connected to a spinner casing.

4. A wind power installation, in particular a gearless wind power installation, including a module carrier (810) according to one of claims 1 to 2.

5. A wind power installation according to claim 4 **characterised in that** a sealing means to prevent the passage of outside air into the pod is provided in a transitional region between the pod casing and the pylon and/or the pylon is sealed off in the interior to prevent the passage of air from the interior of the pylon into the pod.

6. A method of erecting a wind power installation, wherein a module carrier (810) according to one of claims 1 - 2 is prefabricated with electric modules provided for controlling one or more pitch drives of a wind power installation and is equipped with the modules and is fixed to a rotor hub of the wind power installation in order thereby to fix the modules to the rotor hub in one working step.

7. A method according to claim 6 wherein the module carrier (810) is prefabricated with at least one of the following modules:
- a transformer module for supplying the pitch drives with electrical energy,
- a distribution module for direct or indirect distribution of digital information to each pitch drive,
- a blade regulating module for each rotor blade for controlling the respective pitch drive,
- a blade relay module for each rotor blade for carrying out electrical switching-over operations for the respective pitch drive, and/or
- a storage module, in particular a capacitor module, for each rotor blade for storing and providing electrical energy for the respective pitch drive, in particular for an emergency shutdown.

8. A method according to claim 6 or claim 7 wherein a wind power installation in accordance with claim 4 or claim 5 is erected.

## Revendications

1. Support de module (810) servant à fixer des modules électriques prévus pour commander un ou plusieurs entraînements de pas d'une éolienne (100), au niveau d'un moyeu de rotor (800) de l'éolienne, avec un corps de support servant à supporter les modules électriques (814), dans lequel
- le moyeu de rotor est préparé pour tourner autour d'un axe de rotor sensiblement horizontal, et
- l'éolienne présente une ou plusieurs pales de rotor (1), et
- le corps de support est préparé pour être fixé dans une direction axiale de l'axe de rotor devant le moyeu de rotor, **caractérisé en ce que**
- le corps de support est réalisé sensiblement sous la forme d'un disque annulaire et est disposé de manière sensiblement perpendiculaire à l'axe de rotor, dans lequel
- les modules électriques comprennent un module transformateur servant à alimenter les entraînements de pas en énergie électrique et au moins un des éléments suivants :
- un module de sous-distribution servant à distribuer directement ou indirectement des informations numériques à chaque entraînement de pas,
- un module de réglage de pale pour chaque pale de rotor servant à commander l'entraînement de pas respectif,
- un module de relais de pale pour chaque pale de rotor servant à effectuer des commutations électriques pour l'entraînement de pas respectif et/ou
- un module de stockage, en particulier un module condensateur, pour chaque pale de rotor servant à stocker et à fournir de l'énergie électrique pour l'entraînement de pas respectif, en particulier pour un système d'arrêt d'urgence.

2. Support de module (810) selon la revendication 1, **caractérisé en ce que** le corps de support présente un contour adapté à un habillage de spinner (104) et/ou présente des moyens de fixation (820) destinés à relier élastiquement l'habillage de spinner.

3. Moyeu de rotor d'une éolienne avec un support de module (810) selon l'une quelconque des revendications précédentes, dans lequel le support de module (810) est disposé de manière rigide au niveau du moyeu de rotor (800) au niveau de son côté tourné vers le vent au moyen de dispositifs de maintien et/ou dans lequel le support de module (810) est disposé avec son corps de support de manière sensiblement perpendiculaire à l'axe de rotor et/ou dans lequel le support de module (810) est relié de manière élastique à un recouvrement de spinner.

4. Eolienne, en particulier éolienne sans transmission, comprenant un support de module (810) selon l'une quelconque des revendications 1 à 2.

5. Eolienne selon la revendication 4, **caractérisée en ce qu'**est prévu, dans une zone de transition entre l'habillage de nacelle et le mât, un système d'étanchéification empêchant tout passage d'air d'air extérieur dans la nacelle et/ou le mât est étanchéifié à l'intérieur contre tout passage d'air d'air provenant de l'intérieur du mât dans la nacelle.

6. Procédé servant à construire une éolienne, dans lequel un support de module (810) selon l'une quelconque des revendications 1 et 2 est préfabriqué avec des modules électriques prévus pour commander un ou plusieurs entraînements de pas d'une éolienne et est équipé des modules et est fixé au niveau d'un moyeu de rotor de l'éolienne pour ainsi fixer les modules en une étape de travail au niveau du moyeu de rotor.

7. Procédé selon la revendication 6, dans lequel le support de module (810) est préfabriqué avec au moins un des modules suivants :
- un module transformateur servant à alimenter les entraînements de pas en énergie électrique,
- un module de sous-distribution servant à distribuer directement ou indirectement des informations numériques à chaque entraînement de pas,
- un module de réglage de pale pour chaque pale de rotor servant à commander l'entraînement de pas respectif,
- un module de relais de pale pour chaque pale de rotor servant à effectuer des commutations électriques pour l'entraînement de pas respectif, et/ou
- un module de stockage, en particulier un module condensateur, pour chaque pale de rotor servant à stocker et à fournir de l'énergie électrique pour l'entraînement de pas respectif, en particulier pour un système d'arrêt d'urgence.

8. Procédé selon la revendication 6 ou 7, dans lequel une éolienne selon la revendication 4 ou 5 est construite.
